# EUROPEAN PATENT APPLICATION

(11) **EP 3 604 979 A1**
(43) Date of publication of application: **05.02.2020**
(21) Application number: 19188634.0
(22) Date of filing: 26.07.2019
(51) Int. Cl.: F25B 45/00, F16K 27/12

(54) **FILLING CONNECTOR FOR REFRIGERATION GASES**

(30) Priority: 02.08.2018 IT 201800007753
(71) Applicant: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(57) **Abstract**

A filling connector (10) for refrigeration gases, comprising a connector body (11) adapted to accommodate a filling mechanism (18), and a cap (12) adapted to be coupled to the connector body (11), the particularity of which resides in that between the connector body (11) and the cap (12) there is a first lower seal, provided by means of a gasket (17) adapted to be accommodated between the lower ends of the cap (12) and one face of the body (11) of the connector (10), a second seal (14) being provided between the upper end of the connector body (11) and an internal region of the cap (12).

## Description

The present invention relates to a filling connector for refrigeration gases. More particularly, the invention relates to a filling connector for HC refrigeration gases.

As is known, connectors are commercially available for filling the gas in a refrigeration circuit which provide this function by being able to accommodate inside them an adapted filling connector.

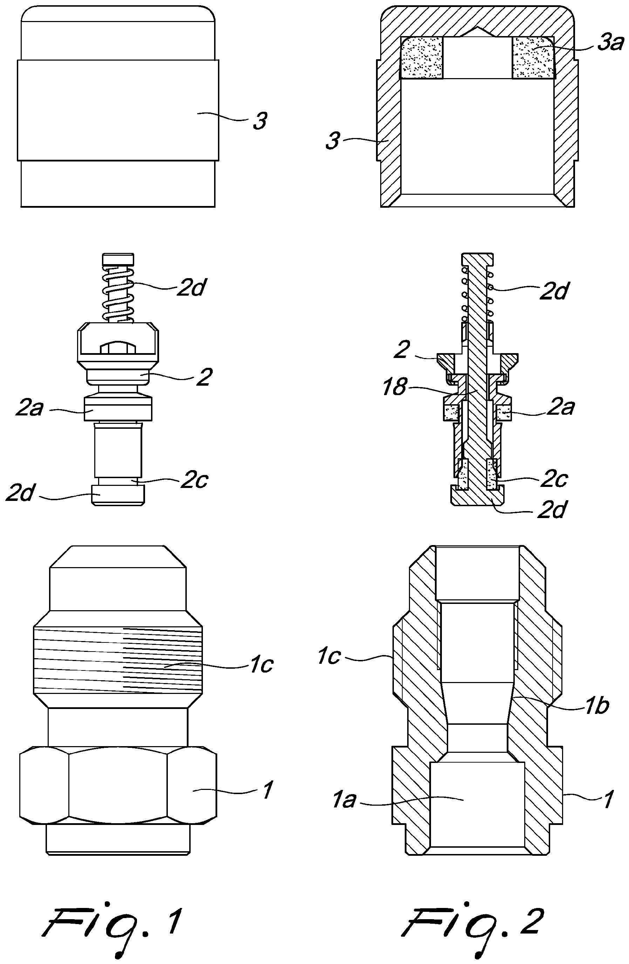

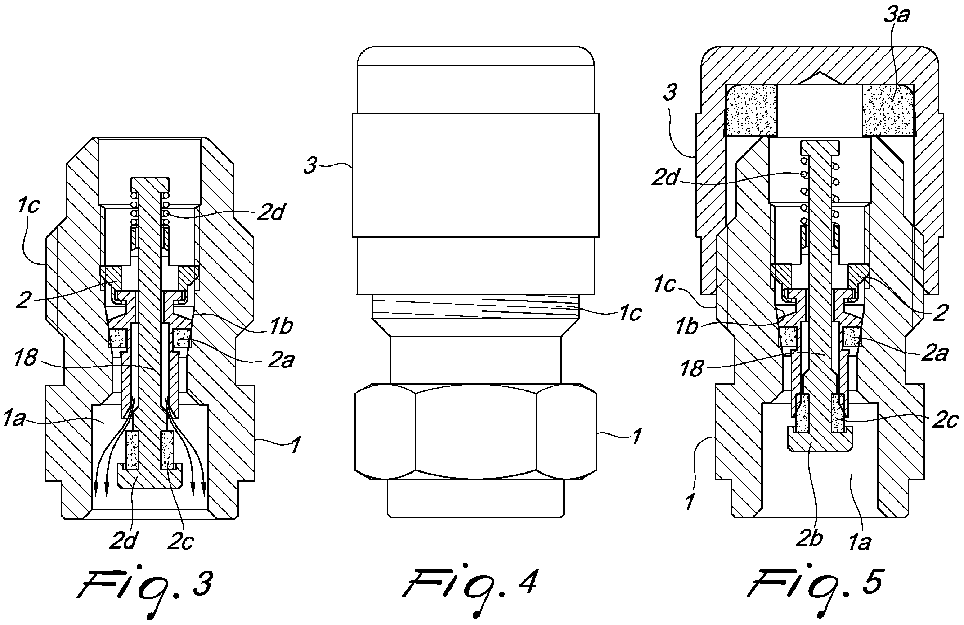

Connectors of the known type are constituted by the components shown in Figures 1 to 5.

With reference therefore to the above cited figures, the filling connector for refrigeration gases of the known kind comprises a connector body 1 which is generally made of brass with a receptacle 1a adapted for insertion in a copper pipe which is then welded to said body. This allows to connect the connector to the circuit. The connection can be provided by welding or by means of a threaded coupling.

On the opposite side, the connector body has a seat 1b for the fitting of a filling mechanism 2 and an external thread 1c which allows to screw on a cap 3.

The filling mechanism 2 is composed of an external gasket 2a, which provides the seal with the valve body 1 once the mechanism has been assembled, a stem 2b which is complete with a gasket 2c and a spring 2d which, when it is in the inactive position, provides an outward seal and, when it is pressed from outside, opens the connection and allows the gas to enter the refrigeration circuit.

The cap 3 is assembled to the connector body 1 after filling the refrigerant and it provides the outward seal by means of the compression of a gasket 3 a on the end of the connector body 1.

This should ensure the absence of leaks of refrigerant even if the gaskets of the filling mechanism should leak.

The connector of the known type, while ensuring a certain safety in use in the case of non-flammable refrigeration gas, may have some problems if HC flammable gases, for example R290 propane, are used.

In fact, while in the case of a leak of non-flammable refrigeration gas the only consequence that may occur is the economic loss related to the gas dispersion, in the case of a flammable gas a safety-related problem obviously arises.

The aim of the present invention is to provide a filling connector for refrigeration gases that achieves higher safety than connectors of the known type.

Within the scope of this aim, an object of the present invention is to provide a filling connector for refrigeration gases that eliminates the problems of refrigeration gas leaks.

Another object of the present invention is to provide a filling connector for refrigeration gases that has improved safety in the presence of the use of a flammable refrigeration gas.

Not least object of the present invention is to provide a filling connector for refrigeration gases that is highly reliable, relatively simple to provide and at competitive costs.

This aim, as well as these and other objects which will become better apparent hereinafter, are achieved by a filling connector for refrigeration gases, comprising a connector body adapted to accommodate a filling mechanism, and a cap adapted to be coupled to said connector body, characterized in that between said connector body and said cap there is a first lower seal, provided by means of a gasket adapted to be accommodated between the lower end of said cap and one face of said body of the connector, a second seal being provided between the upper end of said connector body and an internal region of said cap.

Further characteristics and advantages of the invention will become better apparent from the description of a preferred but not exclusive embodiment of a connector according to the invention, illustrated by way of non-limiting example in the accompanying drawings, wherein:
Figure 1 is an exploded view of a filling connector for refrigeration gases according to the prior art;
Figure 2 is a longitudinal sectional view of the filling connector of Figure 1;
Figure 3 is a longitudinal sectional view of a detail of the connector of the known type;
Figure 4 is a view of the connector of the known type in the assembled condition;
Figure 5 is a longitudinal sectional view of the connector of the preceding figures, in the assembled condition;
Figure 6 is a view of the connector according to the present invention;
Figure 7 is a longitudinal sectional view, taken along the plane VII-VII, of the connector according to the present invention;
Figure 8 is a top view of the connector according to the present invention.

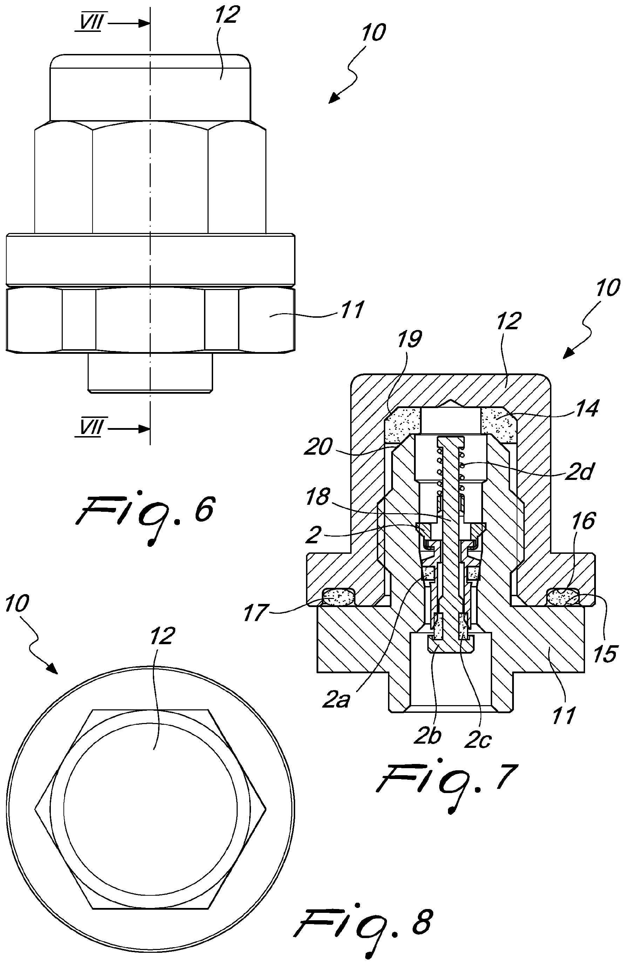

With reference to Figures 6 to 8 (Figures 1 to 5 show the connector according to the prior art), the connector according to the present invention, generally designated by the reference numeral 10, comprises a connector body 11, generally made of brass. The connector body 11 has a region 15 for the abutment of a gasket 17 which is provided between the connector body 11 and a cap 12 adapted to couple to the connector body 11.

The cap 12 is generally made of brass and is provided so as to form, at its lower face adapted to be coupled to the connector body 11, a seat 16 adapted to accommodate the gasket 17, which thus allows to provide a seal between the connector body 11 and the cap 12.

The gasket 17 is conveniently an O-ring which, compressed against the abutment 15 of the connector body 11, provides a second seal of the cap 12, since the primary seal is provided by compression by a gasket 14 which is arranged at the upper region of the cap 12 and abuts against the upper portion of the connector body 11, as shown in Figure 7.

Conveniently, the bottom of the cap 12, i.e., the portion of the cap that is adapted to couple to the connector body 11, in particular with the gasket 14, has a 45° external taper, which is parallel to a corresponding taper that is present at a region 20 of the connector body 11.

The region 20 of the body of the connector is the upper region of the body of the connector that is adapted to face the bottom of the cap 12.

In this manner, the parallel arrangement between the surfaces 19 and 20, which as mentioned have the same taper, allows to compress uniformly the gasket 14 between the body 11 and the cap 12 and thus improve the seal between the connector body 11 and the cap 12.

The gasket 14 is conveniently an annular gasket with a square cross-section, which is compressed between the connector body 11 and the cap 12.

The filling connector according to the invention furthermore provides for a filling mechanism 18 that is substantially similar to filling mechanisms of the known type.

The connector provided in this manner allows to have a double seal, which is embodied by the gasket 14 and the O-ring 17, with the advantage of the total absence of leaks even in the unfortunate case in which the filling mechanism 18 might not form a seal.

The connector thus provided increases safety, for example if flammable refrigeration gases, such as for example HC refrigerants, are used.

The connector thus provided allows therefore to eliminate the problems related to the loss of refrigeration gas, with the consequent advantage of reducing/eliminating filling costs, in addition to offering, as mentioned, increased safety during the use of flammable refrigeration gases.

In practice it has been found that the connector according to the invention achieves the intended aim and objects.

The connector thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application no. 102018000007753, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A filling connector (10) for refrigeration gases, comprising a connector body (11) adapted to accommodate a filling mechanism (18), and a cap (12) adapted to be coupled to said connector body (11), **characterized in that** between said connector body (11) and said cap (12) there is a first lower seal, provided by means of a gasket (17) adapted to be accommodated between the lower end of said cap (12) and one face of said body (11) of the connector, a second seal (14) being provided between the upper end of said connector body (11) and an internal region of said cap (12).

2. The connector according to claim 1, **characterized in that** said first seal (17) is an O-ring adapted to be accommodated in a seat (16) formed at a lower face of said cap (12) adapted to face an upper face of said connector body (11).

3. The connector according to claim 1, **characterized in that** said second seal (14) is provided by a gasket adapted to be arranged between said upper end of said connector body (11) and said internal region of said cap (12).

4. The connector according to claim 3, **characterized in that** said second seal (14) is a gasket having a square cross-section.

5. The connector according to one or more of the preceding claims, **characterized in that** the internal region of said cap (12), adapted to accommodate said second seal (14), is provided with walls (19) which are angled at 45°, which correspond to walls (20) which are also angled at 45° and are present on the upper end of said body (11) of the connector.

6. The connector according to one or more of the preceding claims, **characterized in that** said second seal (14) is compressed between said walls (19) at 45° of the cap (12) and said walls (20) at 45° of said body (11) of the connector, said walls (19, 20) at 45° of said cap (12) and of said body (11) of the connector being mutually parallel.
